# EUROPÄISCHE PATENTANMELDUNG

(11) **EP 1 754 625 A2**
(43) Veröffentlichungstag der Anmeldung: **21.02.2007**
(21) Anmeldenummer: 06119149.0
(22) Anmeldetag: 18.08.2006
(51) Int. Cl.: B60N 3/10

(54) **Vorrichtung zum Halten von Getränkedosen, Trinkflaschen und ähnlichen Behältnissen**

(30) Priorität: 19.08.2005 DE 102005039266
(71) Anmelder: Dr. Schneider Kunststoffwerke GmbH, 96317 Kronach (DE)
(72) Erfinder: Uhlenbusch, Olaf, 96275 Marktzeuln (DE); Krinke, Stephanie, 96346 Wallenfels (DE)
(74) Vertreter: Kinnstätter, Klaus

(57) **Zusammenfassung**

Die Erfindung betrifft eine Vorrichtung zum Halten von Getränkedosen, Trinkflaschen oder dergleichen Behältnissen in einem Kraftfahrzeug oder in einer Trägerplatte, bestehend aus zumindest einer Baugruppe zur Abstützung des aufzunehmenden Behältnisses in vertikaler Richtung. Aufgabe der Erfindung ist es, eine solche Vorrichtung zu schaffen, mit der in einfacher und kostengünstiger Weise unterschiedliche Abstützhöhen erreichbar sind. Diese Aufgabe wird gelöst, indem die Vorrichtung einen Grundkörper (1) und einen Stützkörper (2) aufweist, denen ein Betätigungselement (3; 4; 5) derart zugeordnet ist, dass die Relativposition zwischen dem Grundkörper (1) und dem Stützkörper (2) in Richtung der Mittellängsachse (X) des Grundkörpers (1) veränderbar ist.

## Beschreibung

Die Erfindung betrifft eine Vorrichtung zum Halten von Getränkedosen, Trinkflaschen oder Behältnissen in einem Kraftfahrzeug oder in einer Trägerplatte mit den in den Oberbegriffen der Ansprüche 1, 4 und 6 angegebenen Merkmalen.

Vorrichtungen der gattungsgemäßen Art sind bereits in verschiedenartigen Ausführungen bekannt. So wird in DE 29 30 855 A1 ein Getränkedosenhalter beschrieben, der ein rohrförmiges Halteteil zur Aufnahme von Getränkedosen mit kreisförmigem Querschnitt aufweist. Für die Abstützung in einem Kraftfahrzeug wird das Halteteil mit einem Steckteil zwischen der Scheibe einer Fahrzeugtür und deren Scheibendichtung eingeklemmt. Dies kann jedoch Schäden an diesen Bauteilen ergeben. Außerdem wird bei jeder Bewegung der Fahrzeugtür zwangsläufig auch das Halteteil mit der zugeordneten Getränkedose verlagert, so dass beim Öffnen oder Schließen der Fahrzeugtür Flüssigkeit verschüttet werden kann, sofern sich eine bereits geöffnete Dose im Halteteil befindet. Weiterhin erschwert die Anordnung des Getränkedosenhalters in Höhe der Unterkante der Scheibe und seitlich neben dem Fahrer oder Beifahrer den Zugriff auf die Getränkedose. Ferner sind in modernen Kraftfahrzeugen Getränkedosenhalter überwiegend bereits serienmäßig enthalten, so dass einer Konstruktion gemäß DE 29 30 855 A1 ungeachtet funktioneller Mängel ohnehin die Akzeptanz am Markt fehlt.

Die Halterung für Getränkedosen gemäß DE 90 06 776 U1 ist für eine Montage in der Instrumententafel von Kraftfahrzeugen vorgesehen. Diese Halterung weist einen Schieber auf, der in einem quaderförmigen Gehäuse abgestützt ist und der im geöffneten Zustand zwei teilkreisförmige Ausnehmungen zur Aufnahme von jeweils einer Getränkedose freigibt.

Die Vorrichtung gemäß DE 44 04 078 A1 weist einen Haltering für eine Getränkedose auf, der aus zwei Baugruppen zusammengefügt ist und in Ruhestellung in einem Ablagefach angeordnet ist. Die beiden Baugruppen des Halterings sind über Drehgelenke miteinander verbunden und können aus der zusammengeklappten Ruhestellung in eine Gebrauchsstellung bewegt werden. Weiterhin ist an einer Baugruppe des Halterings ein schwenkbares Klemmteil angeordnet, das mittels Federkraft an das aufzunehmende Behältnis gedrückt wird. Dadurch ist eine Anpassung an Flaschen oder Dosen mit unterschiedlichem Durchmesser möglich. Allerdings erfordert ein Wechsel zwischen der Ruhestellung und der Gebrauchsstellung einen aufwendigen Bewegungsablauf, der durch zahlreiche Einzelteile mit teilweise komplizierten Konturen realisiert wird.

Für die genannten technischen Lösungen DE 90 06 776 U1 und DE 44 04 078 A1 wird ein Bauraum mit einer Tiefe benötigt, die etwas größer sein muss als der Durchmesser vom aufzunehmenden Behältnis. Ein entsprechend tiefer Bauraum ist oftmals lediglich im Bereich der Instrumententafel verfügbar, so dass die Montagemöglichkeiten begrenzt sind. Außerdem ist nachteilig, dass die Höhe des für die Montage verfügbaren Bauraums weitgehend die maximale Abstützhöhe des Behältnisses bestimmt. Denn selbst mit einem sehr aufwendigen Bewegungsablauf der Bauteile wie in der benannten DE 44 04 078 A1 ist lediglich eine Abstützhöhe möglich, die nur geringfügig größer ist als die Höhe der Vorrichtung in der "Ruhestellung".

Aus DE 20 2004 019 209 U1 ist eine Vorrichtung bekannt, bei der an einem Grundkörper zur Aufnahme von Getränkedosen, Trinkflaschen oder dergleichen Behältnissen im Bereich der oberen Stirnfläche eine Auskragung angeordnet ist. An der Auskragung sind flächige Bauelemente verlagerbar abgestützt, mit denen der Öffnungsquerschnitt des Grundkörpers verändert werden kann. Somit ist eine Anpassung dieser Vorrichtung an Behältnisse mit unterschiedlichem Durchmesser möglich. Weiterhin kann die Vorrichtung an verschiedenartigen Positionen im Kraftfahrzeug montiert werden, so dass grundsätzlich auch ausreichender Bauraum verfügbar ist, um eine ausreichende Abstützhöhe für das Behältnis zu realisieren. Allerdings kann die jeweils gewählte Abstützhöhe nicht variiert werden, so dass sich Probleme ergeben können, sofern Getränkedosen und Trinkflaschen mit sehr unterschiedlichen Höhen lagestabil abgestützt werden sollen.

Weiterhin sind bereits verschiedenartige Vorrichtungen zum Halten von Getränkedosen, Trinkflaschen und ähnlichen Behältnissen in Kraftfahrzeugen bekannt, bei denen mit unterschiedlichen Gestaltungskonzepten veränderbare Abstützhöhen einstellbar sind.

Die Patentanmeldung DE 10 2004 017 419 A1 beschreibt eine Konstruktion, bei der in zwei benachbarten Aufnahmeöffnungen ein Haltering in mehreren Positionen einsetzbar ist, so dass sich jeweils unterschiedliche Abstützhöhen ergeben.

In DE 101 01 642 A1 und DE 10 2004 021 685 A1 werden für die Höheneinstellung teleskopartig ineinander geführte Elemente vorgeschlagen.

Gemäß DE 202 16 675 U1, DE 202 18 006 U1 und DE 10 2004 014 291 A1 wird die Relativposition zwischen einem Grundkörper zur Abstützung des Bodens einer Getränkedose und einem im Grundkörper geführten Stützkörper zur seitlichen Abstützung der Getränkedose durch mittels Federkraft unterstützte Bauteile verändert.

Aus DE 101 59 146 A1, DE 102 31 519 A1 und DE 103 50 118 A1 sind ferner Konstruktionen bekannt, bei denen durch eine kombinierte Dreh- und Schraubbewegung eine Änderung der Relativposition zwischen dem Grundkörper und dem Stützkörper erreichbar ist.

Aufgabe der Erfindung ist es, eine Vorrichtung zu schaffen, mit der in einfacher und kostengünstiger Weise unterschiedliche Abstützhöhen für Getränkedosen, Trinkflaschen und ähnliche Behältnisse erreichbar sind und auch Durchmesseranpassungen realisiert sind.

Diese Aufgabe wird gelöst durch Ausgestaltung einer Vorrichtung gemäß den Merkmalen der Ansprüche 1, 4 und 6. Vorteilhafte Ausgestaltungen sind Gegenstand der jeweiligen Unteransprüche, deren technische Merkmale im Ausführungsbeispiel näher beschrieben werden.

Die erfindungsgemäß ausgestalteten Vorrichtungen weisen alle gemäß den nebengeordneten Ansprüchen einen Grundkörper und einen Stützkörper auf, denen ein Betätigungselement derart zugeordnet ist, dass die Relativposition zwischen dem Grundkörper und dem Stützkörper in Richtung der Mittellängsachse des Grundkörpers veränderbar ist. Die Ausführungsform nach Patentanspruch 1 ist dadurch charakterisiert, dass der Stützkörper zwei Hülsensegmente aufweist, wobei das untere Hülsensegment im Grundkörper abgestützt ist und an der Mantelfläche des oberen Hülsensegmentes eine Kontur mit einem spiralförmig ansteigenden Gewindegang vorgesehen ist und die Höhenverstellung mit der Durchmesserverstellung gekoppelt ist, so dass beispielsweise beim Einsetzen von schlanken Dosen mit der Höhenverstellung zugleich auch eine Änderung des Klemmradius einhergeht und die Dose gesichert gehalten ist.

Die Ausführung nach dem nebengeordneten Anspruch 4 ist dadurch charakterisiert, dass der Stützkörper ein Hülsensegment aufweist, an dessen Mantelfläche ein Abschnitt mit einer zahnstangenförmigen Kontur ausgestaltet ist, die mit einer Zahnradkontur in Wirkverbindung steht, die an einem Bedienrad ausgestaltet ist, wobei das Bedienrad in einer am Grundkörper ausgestalteten Halterung abgestützt ist. Alternativ ist mit dem Bedienrad mindestens eine Gewindespindel gekoppelt, die achsparallel außenseitig am Grundkörper oder am Stützkörper angeordnet ist und in eine zahnstangenförmige Kontur an dem Stützkörper eingreift. Bei Drehung des Bedienrades wird der Stützkörper relativ gegenüber dem Grundkörper höhenverstellt. Wenn das Bedienrad eine Drehachse aufweist, die senkrecht zur Längsachse des Stützkörpers verläuft, so kann das Bedienrad an dem Grundkörper außenseitig befestigt sein. Es greift dann mit einem Zahnritzel in die zahnstangenförmige Kontur, so dass beim Drehen des Bedienrades der Stützkörper relativ nach oben oder nach unten verstellt wird. Anstelle einer solchen Anordnung kann auch eine Gewindespindel vorgesehen sein, die am Grundkörper oder einem anderen statischen Teil in der Umgebung fixiert sein kann, z. B. an der Unterseite einer die Vorrichtung umgebenden Platine. Diese Gewindespindel greift mit einem Gewindeabschnitt in eine zahnstangenförmige Kontur an dem Stützkörper ein. Durch Drehen der Spindel, beispielsweise durch darauf angebrachtes oder in Wirkverbindung stehendes horizontales Bedienrad oder durch ein mit der Achse senkrecht zur Längsachse des Stützkörpers angeordneten Bedienrades, das über ein Getriebe mit der Gewindespindel gekoppelt ist, wird die Drehbewegung in eine longitutinale Höhenbewegung des Stützkörpers umgesetzt.

Die Ausführung gemäß dem weiteren nebengeordneten Anspruch 6 ist dadurch gekennzeichnet, dass der Stützkörper ein Hülsensegment aufweist, an dessen Mantelfläche Vorsprünge ausgestaltet sind, die in Durchbrüchen in der Mantelfläche des Grundkörpers geführt sind, wobei zumindest zwei zapfenförmige Vorsprünge mit einer Kulissenführung in Wirkverbindung stehen, die an einer Baugruppe ausgestaltet ist, die in einer rechtwinklig zur Mitte der Längsachse des Grundkörpers verlaufenden Ebene verlagert ist und zwei senkrechte Abschnitte aufweist, in denen die Kulissenführung jeweils schräg verlaufend angeordnet ist.

Bei den Ausführungen der nebengeordneten Ansprüche 4 und 6 kann die Höhenverstellung auch mit der Durchmesserverstellung gekoppelt sein. Der Grundkörper und der Stützkörper weisen jeweils eine annähernd zylinderförmige Kontur auf. Dabei ist der Innendurchmesser des Grundkörpers geringfügig größer als der Außendurchmesser des Stützkörpers. Somit wird eine exakte Führung dieser beiden Baugruppen ineinander erreicht.

Der Stützkörper kann unterschiedlich ausgestaltet werden. In einer ersten Ausführung weist der Stützkörper zwei Hülsensegmente auf. An der Mantelfläche eines dieser Hülsensegmente ist eine Kontur mit einem spiralförmig ansteigenden Gewindegang ausgestaltet. Diese Kontur steht mit einem drehbaren Betätigungsring in Wirkverbindung. Somit kann die Höhe der Vorrichtung durch Drehen des Betätigungsrings verändert werden, indem die Kontur mit dem Gewindegang das entsprechende Hülsensegment nach oben oder unten verschiebt.

Ebenso kann der Stützkörper ein Hülsensegment aufweisen, an dessen Mantelfläche ein Abschnitt mit einer zahnstangenförmigen Kontur ausgestaltet ist. Diese Kontur steht mit einer Zahnradkontur an einem Bedienrad in Wirkverbindung. Somit kann die Höhe der Vorrichtung durch Drehen des Bedienrads verändert werden, indem die Zahnkonturen das entsprechende Hülsensegment nach oben oder unten verschieben.

Der Stützkörper kann jedoch auch ein Hülsensegment aufweisen, an dessen Mantelfläche Vorsprünge ausgestaltet sind, die mit einer Kulissenführung an einer jalousieähnlichen Baugruppe in Wirkverbindung stehen. Somit kann die Höhe der Vorrichtung durch Ziehen oder Schieben der jalousieähnlichen Baugruppe verändert werden, indem die in schrägen Bahnen laufenden Vorsprünge das Hülsensegment nach oben oder unten verschieben. Das Hülsensegment kann einen schrägen oder geraden oberen Abschnitt aufweisen.

Sofern die jalousieähnliche Baugruppe zumindest abschnittsweise flexibel ausgestaltet ist, kann eine wenig Bauraum beanspruchende Anordnung realisiert werden. Weiterhin kann diese jalousieähnliche Baugruppe aus mehreren Einzelteilen beispielsweise mittels einer Clipverbindung zusammengefügt oder als materialeinheitliches Spritzgießteil ausgestaltet werden.

Weiterhin können der Mantelfläche des Grundkörpers oder des Stützkörpers Bauteile zugeordnet werden, mit denen der freie Querschnitt innerhalb der Mantelfläche veränderbar ist. Somit wird eine problemlose Anpassung auf Behältnisse unterschiedlicher Durchmesser erreicht.

Eine derartige Durchmesserverstellung kann mit der Höhenverstellung gekoppelt werden. Diese Funktionen können jedoch auch unabhängig voneinander realisiert werden.

Eine erfindungsgemäß ausgestaltete Vorrichtung ermöglicht in einfacher und kostengünstiger Weise unterschiedliche Abstützhöhen für Getränkedosen, Trinkflaschen und ähnliche Behältnisse. Hierfür ist wenig Bauraum notwendig, so dass die Vorrichtung an verschiedenartigen Positionen in Kraftfahrzeugen oder Trägerplatten montierbar ist. Ein weiterer Vorteil ist die Möglichkeit zur Anpassung für Behältnisse mit unterschiedlichen Durchmessern.

Anstelle der beschriebenen mechanischen Kopplungen kann die Höhenverstellung auch mit bekannten Push-Push-Mechaniken realisiert werden. Diese sind zwischen Grundkörper und verfahrbarem Stützkörper oder zwischen den Stützkörpern einzubringen.

Nachfolgend wird die Erfindung anhand der Zeichnung ergänzend erläutert. Es zeigen:
- Fig. 1: die wesentlichen Einzelteile einer ersten Ausführung einer erfindungsgemäßen Vorrichtung in perspektivischer Ansicht,
- Fig. 2: eine aus den Einzelteilen gemäß Fig. 1 zusammengefügte Vorrichtung in einer ersten Stellung,
- Fig. 3: die Vorrichtung gemäß Fig. 2 in einer anderen Stellung,
- Fig. 4: die wesentlichen Einzelteile einer zweiten Ausführung einer erfindungsgemäßen Vorrichtung in perspektivischer Ansicht,
- Fig. 5: eine aus den Einzelteilen gemäß Fig. 4 zusammengefügte Vorrichtung in einer ersten Stellung,
- Fig. 6: die Vorrichtung gemäß Fig. 5 in einer anderen Stellung,
- Fig. 7: eine Vorrichtung die der gemäß Fig. 5 ähnlich ist, jedoch mit Haltebacken in einer vorstehenden Position und ohne Verschlussblende,
- Fig. 8: die Vorrichtung gemäß Fig. 7 mit Haltebacken in einer versenkten Position,
- Fig. 9: die wesentlichen Einzelteile einer dritten Ausführung einer erfindungsgemäßen Vorrichtung in perspektivischer Ansicht,
- Fig. 10: eine aus den Einzelteilen gemäß Fig. 9 zusammengefügte Vorrichtung in einer ersten Stellung,
- Fig. 11: die Vorrichtung gemäß Fig. 10 in einer anderen Stellung,
- Fig. 12: die Vorrichtung gemäß Fig. 10 in einer weiteren Stellung.

In den Zeichnungen sind verschiedene Vorrichtungen zum Halten von Getränkedosen, Trinkflaschen oder dergleichen Behältnissen in einem Kraftfahrzeug oder in einer Trägerplatte dargestellt. Die Vorrichtungen weisen einen Grundkörper 1 und einen Stützkörper 2 auf. Am Grundkörper 1 ist ein Konturabschnitt zur Abstützung eines aufzunehmenden Behältnisses in vertikaler Richtung vorgesehen. Hierfür ist beispielsweise eine geschlossene Bodenfläche oder eine Gitterstruktur geeignet, wobei derartige Ausgestaltungen in der Zeichnung allerdings nicht näher dargestellt sind.

Der Grundkörper 1 und der Stützkörper 2 weisen jeweils eine annähernd zylinderförmige Kontur auf. Dabei ist der Innendurchmesser des Grundkörpers 1 geringfügig größer als der Außendurchmesser des Stützkörpers 2, so dass der Stützkörper 2 innerhalb des Grundkörpers 1 geführt werden kann.

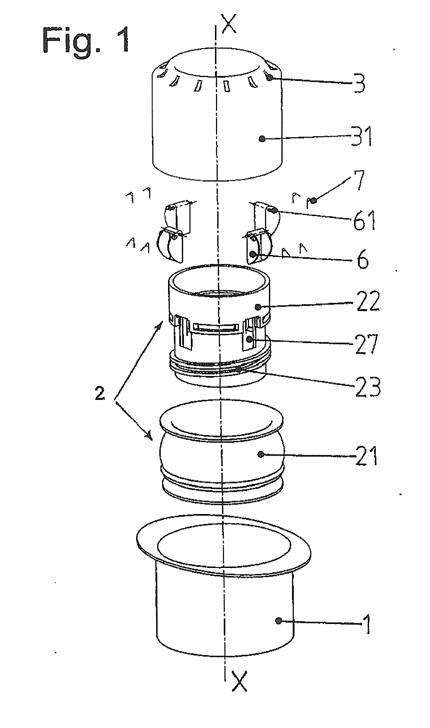

In Fig. 1 bis Fig. 3 ist eine Ausführung dargestellt, bei welcher der Stützkörper 2 zwei Hülsensegmente 21 und 22 aufweist. Das untere Hülsensegment 21 ist im Grundkörper 1 abgestützt. An der Mantelfläche des oberen Hülsensegments 22 ist eine Kontur mit einem spiralförmig ansteigenden Gewindegang 23 ausgestaltet. Das obere Hülsensegment 22 steht mit einem drehbaren Betätigungsring 3 in Wirkverbindung. Dieser Betätigungsring 3 weist einen Schaftabschnitt 31 auf, der den Stützkörper 2 sowie gegebenenfalls weitere Bauteile zumindest teilweise überdeckt.

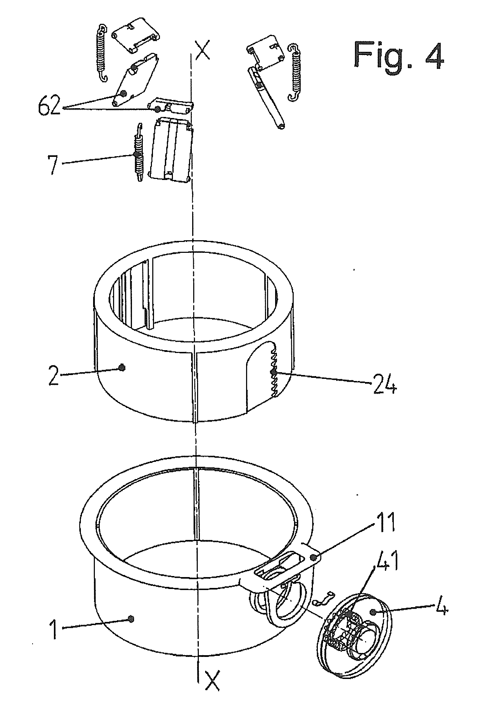

In Fig. 4 bis Fig. 8 ist eine Ausführung dargestellt, bei welcher der Stützkörper 2 ein Hülsensegment aufweist, an dessen Mantelfläche ein Abschnitt mit einer zahnstangenförmigen Kontur 24 ausgestaltet ist. Die zahnstangenförmige Kontur 24 steht mit einer Zahnradkontur 41 in Wirkverbindung, die an einem Bedienrad 4 ausgestaltet ist. Dieses Bedienrad 4 ist in einer am Grundkörper 1 ausgestalteten Halterung 11 abgestützt.

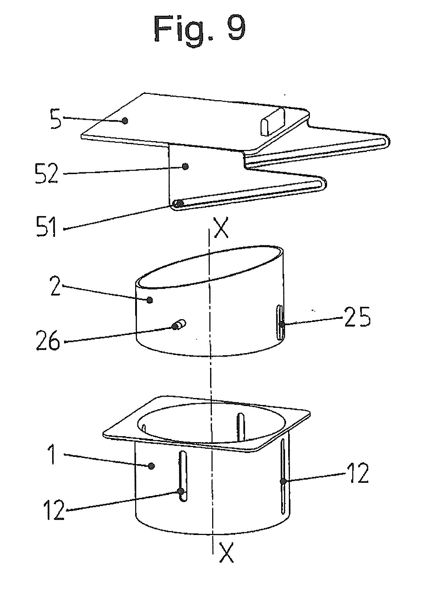

In Fig. 9 bis Fig. 12 ist eine Ausführung dargestellt, bei welcher der Stützkörper 2 ein Hülsensegment aufweist, das im oberen Abschnitt beispielsweise mit einer schräg umlaufenden Kontur ausgestaltet ist. An der Mantelfläche des als Hülsensegment ausgestalteten Stützkörpers 2 sind Vorsprünge 25 und 26 vorgesehen. Diese Vorsprünge 25 und 26 werden in Durchbrüchen 12 in der Mantelfläche des Grundkörpers 1 geführt. Hierbei bewirkt der Vorsprung 25 mit dem zugeordneten Durchbruch 12 eine exakte Ausrichtung des Stützkörpers 2 innerhalb der Innenkontur des Grundkörpers 1.

Die zumindest zwei weiteren zapfenförmigen Vorsprünge 26 stehen mit einer Kulissenführung 51 in Wirkverbindung, die an einer jalousieähnlichen Baugruppe 5 ausgestaltet ist. Diese jalousieähnliche Baugruppe 5 ist in einer rechtwinklig zur Mittellängsachse X des Grundkörpers 1 verlaufenden Ebene verlagerbar und weist zwei senkrechte Abschnitte 52 auf. In den Abschnitten 52 sind die Kulissenführungen 51 jeweils schräg verlaufend angeordnet.

Die jalousieähnliche Baugruppe 5 kann verschiedenartig ausgestaltet werden. So kann der Abschnitt zwischen den beiden senkrechten Abschnitten 52 mit der Kulissenführung 51 flexibel ausgestaltet werden. Ebenso können dieser Abschnitt und die beiden senkrechten Abschnitte 52 als separate Bauteile ausgeführt und mittels einer Clipverbindung miteinander verbunden werden. Weiterhin kann die gesamte jalousieähnliche Baugruppe 5, also die beiden senkrechten Abschnitte 52 und der dazwischen liegende Abschnitt materialeinheitlich als ein gemeinsames Spritzgießteil ausgestaltet werden.

Aus den bisherigen Darlegungen ist ersichtlich, dass dem Grundkörper 1 und dem Stützkörper 2 unabhängig von der jeweils konkreten Ausführung ein Betätigungselement derart zugeordnet ist, dass die Relativposition zwischen dem Grundkörper 1 und dem Stützkörper 2 in Richtung der Mittellängsachse X des Grundkörpers 1 veränderbar ist. Als Betätigungselement kann alternativ ein Betätigungsring 3, ein Bedienrad 4 oder eine jalousieähnliche Baugruppe 5 verwendet werden.

Weiterhin ist vorgesehen, dass der Mantelfläche des Grundkörpers 1 oder des Stützkörpers 2 Bauteile zugeordnet sind, mit denen der freie Querschnitt innerhalb des Grundkörpers 1 oder des Stützkörpers 2 veränderbar ist.

Gemäß Fig. 1 sind hierfür beispielsweise in der Mantelfläche des oberen Hülsensegments 22 vier Aussparungen 27 ausgestaltet, denen jeweils eine in den Innenraum schwenkbare Haltebacke 6 zugeordnet ist. Jede Haltebacke 6 weist zwei zapfenförmige Vorsprünge 61 auf. Diese Vorsprünge 61 sind in Halterungen an der Mantelfläche des Hülsensegments 22 gelagert.

Bei der Ausführung gemäß Fig. 4 sind die Haltebacken 6 nicht als ein kompaktes Bauteil ausgestaltet, sondern als zwei flächige und zueinander schwenkbare Segmente 62. Diese Backensegmente 62 sind in Halterungen an der Mantelfläche des Stützkörpers 2 gelagert.

Anstelle der dargestellten Ausführungen können der Grundkörper 1 bzw. der Stützkörper 2 und die Haltebacken 6 bzw. Backensegmente 62 einteilig aus Kunststoff gefertigt werden. Die Verbindung und gleichzeitige Relativbewegung zwischen den Bauteilen wird dabei realisiert, indem die Haltebacke 6 bzw. ein Backensegment 62 mit einem Filmscharnier am Grundkörper 1 bzw. Stützkörper 2 gelagert ist.

Eine vorteilhafte Ausgestaltung wird erreicht, sofern die Haltebacken 6 oder Backensegmente 62 in Richtung des Innenraums mit einer Federkraft beaufschlagt werden. Gemäß Fig. 1 und Fig. 4 kann hierfür jeder Haltebacke 6 bzw. jedem Backensegment 62 eine separate Feder 7 zugeordnet werden. Alternativ kann eine umlaufende Spiralfeder oder ein umlaufender Gummiring verwendet werden, die jeweils sämtliche Haltebacken 6 bzw. Backensegmente 62 beaufschlagen.

Ebenso ist es möglich, dass der Mantelfläche des Grundkörpers 1 bzw. Stützkörpers 2 Klemmbacken zugeordnet sind, deren Stellung mit einem Betätigungsring oder mit einer Kulissenführung veränderbar ist. Derartige Varianten sind in den Zeichnungen allerdings nicht dargestellt.

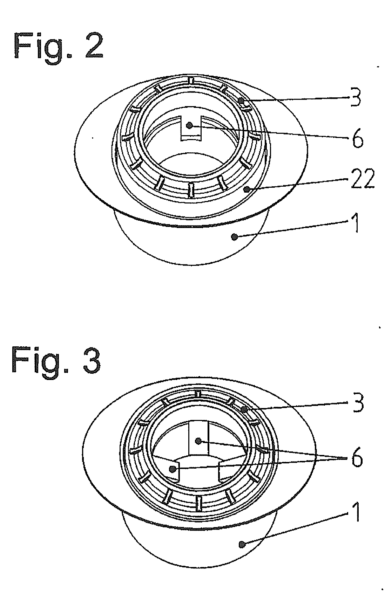

Fig. 3, Fig. 5 und Fig. 7 zeigen jeweils eine Stellung, in der sich der Stützkörper 2 vollständig innerhalb der Kontur des Grundkörpers 1 befindet. Diese Stellung ist für Behältnisse mit geringer Höhe geeignet.

Hingegen zeigen Fig. 2, Fig. 6 und Fig. 8 jeweils eine Stellung, in der sich der Stützkörper 2 weitgehend oberhalb vom Grundkörper 1 befindet. Diese Stellung ist für Behältnisse mit großer Höhe geeignet.

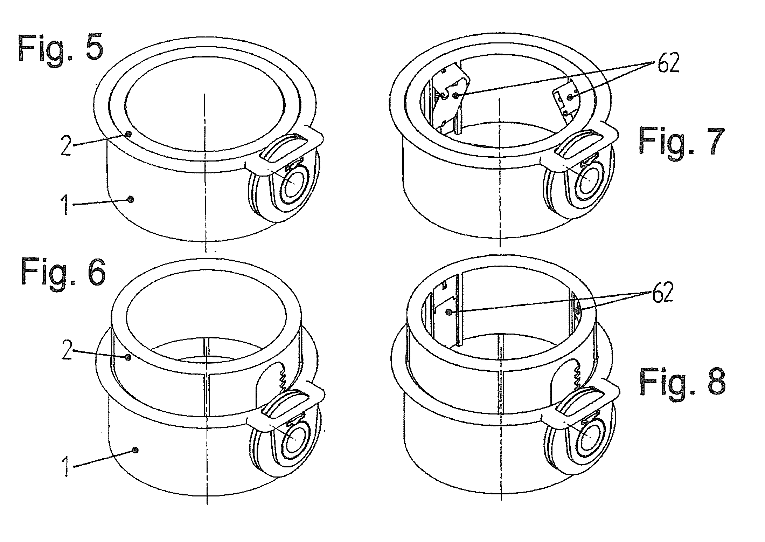

Bei den Ausführungen gemäß Fig. 2 und Fig. 3 sowie Fig. 7 und Fig. 8 ist die Vorrichtung zusätzlich mit Haltebacken 6 bzw. Backensegmenten 62 ausgestattet. Dabei kann die Höhenverstellung vorteilhaft mit der Durchmesserverstellung gekoppelt werden. So könnte eine große Standhöhe gemäß Fig. 2 und Fig. 8 mit einer weiten Stellung der Haltebacken 6 bzw. Backensegmente 62 für bauchige, große Behältnisse und eine niedrige Standhöhe gemäß Fig. 3 und Fig. 7 mit einer engen Stellung der Haltebacken 6 bzw. Backensegmente 62 für schlanke, kleine Behältnisse kombiniert werden.

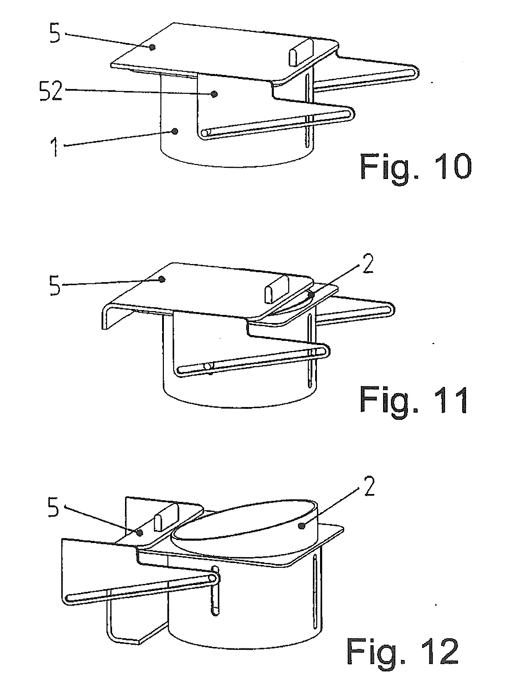

Fig. 10 zeigt eine ähnliche Stellung der Vorrichtung wie Fig. 3, Fig. 5 und Fig. 7. Allerdings kann bei dieser Variante kein Behältnis abgestützt werden, weil die jalousieähnliche Baugruppe 5 den Stützkörper 2 abdeckt.

Fig. 11 zeigt eine Stellung der Vorrichtung während der Verlagerung der jalousieähnlichen Baugruppe 5, in deren Folge der Stützkörper 2 nach oben verlagert wird.

Fig. 12 zeigt eine Stellung nach vollständiger Verlagerung der jalousieähnlichen Baugruppe 5, in der nunmehr der Stützkörper 2 nach oben verlagert und frei zugänglich ist.

### Bezugszeichenliste

- 1: Grundkörper
- 11: Halterung
- 12: Durchbruch

- 2: Stützkörper
- 21: Hülsensegment
- 22: Hülsensegment
- 23: Gewindekontur
- 24: zahnstangenförmige Kontur
- 25: stegartiger Vorsprung
- 26: zapfenförmiger Vorsprung
- 27: Aussparung

- 3: Betätigungsring
- 31: Schaftabschnitt

- 4: Bedienrad
- 41: Zahnradkontur

- 5: jalousieähnliche Baugruppe
- 51: Kulissenführung
- 52: senkrechter Abschnitt

- 6: Haltebacke
- 61: zapfenförmiger Vorsprung
- 62: Backensegment

- 7: Feder

- X: Mittellängsachse des Grundkörpers

## Patentansprüche

1. Vorrichtung zum Halten von Getränkedosen, Trinkflaschen oder Behältnissen in einem Kraftfahrzeug oder in einer Trägerplatte, bestehend aus zumindest einer Baugruppe zur Abstützung des aufzunehmenden Behältnisses in vertikaler Richtung, wobei die Vorrichtung einen Grundkörper (1) und einen Stützkörper (2) aufweist, denen ein Betätigungselement (3; 4; 5) derart zugeordnet ist, dass die Relativposition zwischen dem Grundkörper (1) und dem Stützkörper (2) in Richtung der Mittellängsachse (X) des Grundkörpers (1) veränderbar ist und der Grundkörper (1) einen Konturabschnitt zur Abstützung des aufzunehmenden Behältnisses in vertikaler Richtung aufweist, **dadurch gekennzeichnet , dass** der Stützkörper (2) zwei Hülsensegmente (21; 22) aufweist, wobei das untere Hülsensegment (21) im Grundkörper (1) abgestützt ist und an der Mantelfläche des oberen Hülsensegments (22) eine Kontur mit einem spiralförmig ansteigenden Gewindegang (23) vorgesehen ist und die Höhenverstellung mit einer Durchmesserverstelleinrichtung gekoppelt ist.

2. Vorrichtung nach Anspruch 1, **dadurch gekennzeichnet, dass** das obere Hülsensegment (22) mit einem drehbaren Betätigungsring (3) in Wirkverbindung steht.

3. Vorrichtung nach Anspruch 2, **dadurch gekennzeichnet, dass** der Betätigungsring (3) einen Schaftabschnitt (31) aufweist, der den Stützkörper (2) zumindest teilweise überdeckt.

4. Vorrichtung zum Halten von Getränkedosen, Trinkflaschen oder Behältnissen in einem Kraftfahrzeug oder in einer Trägerplatte, bestehend aus zumindest einer Baugruppe zur Abstützung des aufzunehmenden Behältnisses in vertikaler Richtung, wobei die Vorrichtung einen Grundkörper (1) und einen Stützkörper (2) aufweist, denen ein Betätigungselement (3; 4; 5) derart zugeordnet ist, dass die Relativposition zwischen dem Grundkörper (1) und dem Stützkörper (2) in Richtung der Mittellängsachse (X) des Grundkörpers (1) veränderbar ist und der Grundkörper (1) einen Konturabschnitt zur Abstützung des aufzunehmenden Behältnisses in vertikaler Richtung aufweist, **dadurch gekennzeichnet, dass** der Stützkörper (2) ein Hülsensegment aufweist, an dessen Mantelfläche ein Abschnitt mit einer zahnstangenförmigen Kontur (24) ausgestaltet ist, die mit einer Zahnradkontur (41) in Wirkverbindung steht, die an einem Bedienrad (4) ausgestaltet ist, wobei das Bedienrad (4) in einer am Grundkörper (1) ausgestalteten Halterung (11) abgestützt ist, oder dass mit dem Bedienrad mindestens eine Gewindespindel gekoppelt ist, die achsparallel außenseitig am Grundkörper oder am Stützkörper verlaufend angeordnet ist, die in eine zahnstangenförmige Kontur an dem Stützkörper eingreift und bei deren Drehung der Stützkörper relativ gegenüber dem Grundkörper höhenverstellbar ist.

5. Vorrichtung nach einem der Ansprüche 1 oder 4, **dadurch gekennzeichnet, dass** zusätzlich untenseitig eine Verschlussblende vorgesehen ist, die über eine Zahnradkontur (41) in entgegengesetzter Richtung wie der Stützkörper bewegbar ist und in der Endlage den Boden des Gefäßes bildet.

6. Vorrichtung zum Halten von Getränkedosen, Trinkflaschen oder Behältnissen in einem Kraftfahrzeug oder in einer Trägerplatte, bestehend aus zumindest einer Baugruppe zur Abstützung des aufzunehmenden Behältnisses in vertikaler Richtung, wobei die Vorrichtung einen Grundkörper (1) und einen Stützkörper (2) aufweist, denen ein Betätigungselement (3; 4; 5) derart zugeordnet ist, dass die Relativposition zwischen dem Grundkörper (1) und dem Stützkörper (2) in Richtung der Mittellängsachse (X) des Grundkörpers (1) veränderbar ist und der Grundkörper (1) einen Konturabschnitt zur Abstützung des aufzunehmenden Behältnisses in vertikaler Richtung aufweist, **dadurch gekennzeichnet, dass** der Stützkörper (2) ein Hülsensegment aufweist, an dessen Mantelfläche Vorsprünge (25; 26) ausgestaltet sind, die in Durchbrüchen (12) in der Mantelfläche des Grundkörpers (1) geführt sind, wobei zumindest zwei zapfenförmige Vorsprünge (26) mit einer Kulissenführung (51) in Wirkverbindung stehen, die an einer Baugruppe (5) ausgestaltet ist, die in einer rechtwinklig zur Mittellängsachse (X) des Grundkörpers (1) verlaufenden Ebene verlagerbar ist und die zwei senkrechte Abschnitte (52) aufweist, in denen die Kulissenführung (51) jeweils schräg verlaufend angeordnet ist.

7. Vorrichtung nach Anspruch 6, **dadurch gekennzeichnet, dass** der Abschnitt der Baugruppe (5) zwischen den beiden senkrechten Abschnitten (52) mit der Kulissenführung (51) flexibel ausgestaltet ist.

8. Vorrichtung nach Anspruch 7, **dadurch gekennzeichnet, dass** der Abschnitt der Baugruppe (5) zwischen den beiden senkrechten Abschnitten (52) verläuft und diese senkrechten Abschnitte (52) mittels einer Clipverbindung miteinander verbunden sind.

9. Vorrichtung nach Anspruch 6, **dadurch gekennzeichnet, dass** der Abschnitt der Baugruppe (5) zwischen den beiden senkrechten Abschnitten (52) verläuft und diese senkrechten Abschnitte (52) materialeinheitlich als ein gemeinsames Spritzgießteil ausgestaltet sind.

10. Vorrichtung nach Anspruch 6, **dadurch gekennzeichnet, dass** das Hülsensegment im oberen Abschnitt mit einer schräg umlaufenden Kontur oder mit einer gerade verlaufenden Kontur ausgestaltet ist.

11. Vorrichtung nach einem der vorhergehenden Ansprüche, **dadurch gekennzeichnet**, **das** der Grundköper (1) und der Stützkörper (2) jeweils eine annähernd zylinderförmige Kontur aufweisen, wobei der Innendurchmesser des Grundkörpers (1) geringfügig größer ist als der Außendurchmesser des Stützkörpers (2).

12. Vorrichtung nach Anspruch 1, 4 oder 6, **dadurch gekennzeichnet, dass** der Mantelfläche des Grundkörpers (1) oder des Stützkörpers (2) Bauteile zugeordnet sind, mit denen der freie Querschnitt innerhalb des Grundkörpers (1) oder Stützkörpers (2) veränderbar ist.

13. Vorrichtung nach Anspruch 12, **dadurch gekennzeichnet, dass** in der Mantelfläche des Grundkörpers
(1) oder des Stützkörpers (2) mindestens eine Aussparung (27) ausgestaltet ist, der eine Haltebacke (6) zugeordnet ist, die in den Innenraum schwenkbar ist.

14. Vorrichtung nach Anspruch 13, **dadurch gekennzeichnet, dass** die mindestens eine Haltebacke (6) zwei zapfenförmige Vorsprünge (61) aufweist, die in Halterungen an der Mantelfläche des Grundkörpers (1) oder des Stützkörpers (2) gelagert sind.

15. Vorrichtung nach Anspruch 13, **dadurch gekennzeichnet, dass** die mindestens eine Haltebacke (6) zwei flächige und zueinander schwenkbare Segmente (62) aufweist, die in Halterungen an der Mantelfläche des Grundkörpers (1) oder des Stützkörpers (2) gelagert sind.

16. Vorrichtung nach Anspruch 14 oder 15, **dadurch gekennzeichnet, dass** die mindestens eine Haltebacke (6) in Richtung des Innenraums des Grundkörpers (1) oder des Stützkörpers (2) mit einer Federkraft beaufschlagt ist.

17. Vorrichtung nach Anspruch 13, **dadurch gekennzeichnet, dass** der Grundkörper (1) oder der Stützkörper (2) und die mindestens eine Haltebacke (6) einteilig aus Kunststoff gefertigt sind, wobei die Haltebacke (6) mit einem Filmscharnier am Grundkörper (1) oder Stützkörper (2) gelagert ist.

18. Vorrichtung nach Anspruch 12, **dadurch gekennzeichnet, dass** der Mantelfläche des Grundkörpers (1) oder des Stützkörpers (2) Klemmbacken zugeordnet sind, deren Stellung mit einem Betätigungsring veränderbar ist.

19. Vorrichtung nach Anspruch 12, **dadurch gekennzeichnet, dass** der Mantelfläche des Grundkörpers (1) oder des Stützkörpers (2) Klemmbacken zugeordnet sind, deren Stellung mit einer Kulissenführung veränderbar ist.

20. Vorrichtung nach einem der Ansprüche 4 bis 19, **dadurch gekennzeichnet, dass** die Höhenverstellung mit der Durchmesserverstellung gekoppelt ist.

21. Vorrichtung nach Anspruch 1, **dadurch gekennzeichnet, dass** mindestens ein zweiter Stützkörper vorgesehen ist, der teleskopartig in den ersten Stützkörper (2) eingesetzt und in der Höhe relativ verstellbar ist.

22. Vorrichtung nach Anspruch 1 oder 21, **dadurch gekennzeichnet, dass** zur relativen Höhenverstellung eine an sich bekannte Push-Push-Mechanik vorgesehen ist, bei der mit Federunterstützung und unter Verwendung von Klinken und/oder einer Herzkurvenführung zwischen dem Grundkörper (1) und dem Stützkörper (2) und/oder den Stützkörper der höhenverstellbare Stützkörper (2) durch obenseitigen Druck entriegelt und automatisch nach oben verfährt und durch erneuten, obenseitig ausgeübten Druck in die untere Verstaustellung verbringbar ist.
